# EUROPEAN PATENT SPECIFICATION

(11) **EP 2 992 131 B1**
(45) Date of publication and mention of the grant of the patent: **14.06.2017**
(21) Application number: 13721940.8
(22) Date of filing: 30.04.2013
(51) Int. Cl.: D06F 39/00, D06F 39/04, D06F 39/08

(54) **HEAT PUMP WASHING APPARATUS**
WÄRMEPUMPENWASCHVORRICHTUNG
APPAREIL DE LAVAGE DE POMPE À CHALEUR

(43) Date of publication of application: 09.03.2016
(73) Proprietor: Electrolux Appliances Aktiebolag, 105 45 Stockholm (SE)
(72) Inventor: CAVARRETTA, Francesco, I-33080 Porcia (PN) (IT); ZATTIN, Andrea, I-33080 Porcia (PN) (IT); VIGNOCCHI, Massimiliano, I-33170 Pordenone (IT)
(74) Representative: Electrolux Group Patents
(86) International application number: PCT/EP2013/058960
(87) International publication number: WO 2014/177187

(56) References cited:
- EP-A1- 2 064 982
- EP-A1- 2 096 203
- EP-A1- 2 471 434
- EP-A2- 2 193 741
- EP-A2- 2 206 824

## Description

The present invention relates to a washing apparatus for washing goods as, for example, clothes or dishes; e.g. the washing apparatus includes a dish washing machine or a laundry washing machine. The washing apparatus of the invention includes a heat pump.

In the present application, the laundry washing machine can be a laundry washing machine or a washing-drying machine (i.e. a washing machine which can both wash and dry the goods).

In a washing apparatus for washing goods, it is known to use an electric heater to heat water in a washing chamber. The water commonly is to be heated to a temperature between 20° and 95°, which requires an appreciable amount of energy.

In order to save energy consumption, it is also known to use a heat pump in place of or besides the electric heater for heating the water.

EP 2 096 203 discloses a household washing machine comprising a tub, a heater and a container. The container contains waste water (i.e. used process water) of a previous process phase (e.g., washing or rinsing phase). The household washing machine also comprises a heat pump comprising an evaporator thermally coupled to the container, a condenser, a compressor and an expansion valve. A heat pump medium is pumped from the compressor to the condenser, where liquefaction takes place accompanied by release of heat. The released heat is used to warm process water contained in the tub. From the condenser the medium passes via the expansion valve to the evaporator where the medium evaporates whilst absorbing heat from the waste water contained in the container. From the evaporator the medium runs back to the compressor. At the end of each process phase, the waste water is drained away from the tub into a waste water line via the container wherein the cooled waste water is replaced.

EP 2 224 049 discloses a cleaning device comprising a tub, a waste water tank for intermediate storage of waste water from the tub, a heat pump for extracting heat from the waste water tank and supplying it to process water in the tub, and a controller configured to partially freeze the waste water in the waste water tank and to melt at least part of the ice located in the waste water tank by supplying process water from the tub towards the end of a washing process.

EP 2 206 824 discloses a household appliance comprising a tub, a tank filled with fluid and a heat pump for extracting heat from the fluid contained in the tank and supplying the heat to the tub. The tank is a closed tank whose content is not changed within the framework of the normal process carried out by the household appliance. EP 2 206 824 states that a heat exchanger can be provided between a waste water line and the tank in order to transfer heat from the waste water into the fluid tank.

The Applicant has observed that, during operation of the heat pump in the prior art appliances, the fluid present in the tank is cooled down with respect to a starting temperature and, optionally, at least partially frozen. For example, in case the fluid in the tank is water, the water can turn into ice. It is preferred to ice as much water as possible in order to take advantage of the large amount of energy released when the water changes its thermodynamic state from liquid to solid. This large amount of released energy allows to reduce the dimensions of the tank (less water is needed, if turned into ice, to produce the required energy to warm up the refrigerant in the evaporator), saving valuable space within the appliance.

At the same time, during the cycle of the heat pump, the water in the tank starts icing along the evaporator external walls (or fins) creating a thermal resistance between the refrigerant and the water that is to be cooled down or iced. Therefore, the performance of the evaporator decreases during the cycle.

At the end of a cycle of the heat pump, the cooled/frozen fluid needs preferably to be regenerated, that is warmed up again towards the starting temperature, in order to be used again for a next, optionally immediately subsequent, process cycle. Indeed, a too cold or frozen liquid does not allow an optimal heat exchange during the subsequent washing cycle, hindering the appliance's performances. In case of ice generation, it is preferable that all the ice is melted before the next process cycle is started.

EP 2 096 203 and EP 2 224 049 disclose to use waste water of a previous process phase to replace the cooled waste water in the tank. However, as waste water is used, dirt deposition and/or bacteria proliferation can occur in the tank.

In order to avoid contamination of the tank with deposits from waste water from the tub, EP 2 206 824 discloses to use a closed tank and a heat exchanger between a waste water line and the closed tank in order to transfer heat from the waste water into the liquid contained in the tank.

However, the Applicant has observed that this solution provides low performances in terms of cooled/iced liquid regeneration in the tank.

In particular, with respect to the solution wherein the cooled/iced liquid is regenerated by replacement with waste water from a previous process phase, this solution might take longer time to regenerate the cooled/iced liquid and might not be able to guarantee full regeneration.

It is an object of the invention to provide an alternative washing apparatus including a heat pump.

It is a further object of the invention to provide a washing apparatus with a heat pump that has an efficient cooled/frozen liquid regeneration in the tank.

Additionally, another object of the invention is to provide a washing apparatus with a heat pump in which the heat exchange taking place in the evaporator is particularly efficient.

It is another object of the invention to provide an improved washing apparatus with a heat pump that has improved design and construction, high reliability and long lifetime.

The Applicant has found that the above objects are achieved by a washing apparatus comprising a chamber for receiving goods to be washed and a heat pump. In the evaporator of the heat pump, heat exchange takes place between the refrigerant and an auxiliary fluid, which is flowing in an auxiliary circuit including a tank, which does not house the evaporator.

The presence of a flowing auxiliary fluid in the evaporator improves the heat exchange efficiency between the refrigerant and the auxiliary fluid. The auxiliary fluid is flowing in the auxiliary circuit through the evaporator and the tank; the latter works as an "ice collector" for the frozen portions of auxiliary fluid. Indeed, the auxiliary fluid passing through the evaporator may ice and within the auxiliary circuit both liquid and ice pieces can start circulating. However, when the fluid reaches the tank, the separation between liquid and ice takes place "automatically" by gravity, the ice being less dense than water. In this way, substantially only auxiliary fluid in the liquid form exits the thank and flows back to the evaporator, avoiding problems of fluid regeneration present in the prior art appliances.

According to an aspect, the invention relates to a washing apparatus comprising
- a chamber for receiving goods to be washed,
- a heat pump system including a refrigerant circuit comprising a first heat exchanger being adapted to cool a refrigerant and to heat water to be used in the chamber, a second heat exchanger being adapted to heat said refrigerant and to cool an auxiliary fluid, a compressor arranged in the circuit between the first heat exchanger and the second heat exchanger, and a pressure lowering device arranged between the second heat exchanger and the first heat exchanger,
- an auxiliary circuit wherein said auxiliary fluid is apt to flow, a portion of said auxiliary circuit being adapted to exchange heat with said refrigerant circuit within said second heat exchanger, said auxiliary circuit including a tank having an auxiliary fluid inlet and an auxiliary fluid outlet, said tank being external to said second heat exchanger.

In a preferred embodiment, the first heat exchanger comprises a tube arrangement adapted to deliver heat.

In a preferred embodiment, the second heat exchanger comprises a tube arrangement adapted to absorb heat.

In an embodiment, the refrigerant is adapted to condense inside the first heat exchanger and to evaporate inside the second heat exchanger.

In this embodiment, the first heat exchanger is a condenser and the second heat exchanger is an evaporator.

In another embodiment, the heat transfer fluid can be a refrigerant that operate nonconventional cycles, as for instance carbon dioxide, that do not undergo a phase change (i.e., condensation and evaporation) in the first heat exchanger and second heat exchanger.

The refrigerant is advantageously circulated through said refrigerant circuit.

Suitably, said refrigerant circuit is a closed recirculation circuit.

The first heat exchanger is advantageously thermally coupled to the water to be used in the chamber.

In an embodiment, the first heat exchanger is thermally coupled to the chamber. For example, the first heat exchanger can be arranged inside the chamber, preferably on the bottom of the chamber.

In another embodiment, the first heat exchanger is thermally coupled to a water circuit conducting the water into the chamber.

In this embodiment, the water circuit is a recirculation circuit adapted to drain water from the chamber and to return it back into the chamber at another location. Suitably, the recirculation circuit comprises a pump and a pipe arrangement. In this embodiment, the first heat exchanger can be thermally connected to the pump and/or the pipe arrangement. This solution enables to recirculate the water through the recirculation circuit, which is thermally coupled to the first heat exchanger, till a desired process temperature is reached.

In an embodiment, the auxiliary circuit is a closed recirculation circuit.

In this embodiment, the auxiliary circuit is a recirculation circuit adapted to drain the auxiliary fluid from the tank and to return it back into the tank after having passed through the second heat exchanger.

Suitably, the auxiliary circuit comprises a pump and a pipe arrangement. In this embodiment, the second heat exchanger can be thermally connected to the pump and/or the pipe arrangement of the auxiliary circuit.

This solution enables to recirculate the auxiliary fluid through the recirculation auxiliary circuit, which is thermally coupled to the second heat exchanger, generating a forced convection so that significant amounts of heat energy can be transported very efficiently.

More preferably, said pump is located in the auxiliary circuit between said tank and said second heat exchanger in the direction of flow of said auxiliary fluid.

According to an embodiment, the first and/or second heat exchanger are refrigerant to fluid heat exchanger. More preferably, the first and/or the second heat exchanger are refrigerant to water heat exchanger.

Preferably, the second heat exchanger and/or the first heat exchanger is a countercurrent heat exchanger, said refrigerant and said auxiliary fluid and/or said refrigerant and said water flowing in respective pipes in opposite directions.

In this embodiment, a piping portion of the refrigerant circuit and a piping portion of the auxiliary fluid circuit which exchange heat within the second heat exchanger, e.g. those piping portions which are at a suitable distance in order to perform efficient heat transfer, are substantially parallel and the respective refrigerant and auxiliary fluid are flowing in opposite directions. The maximum amount of heat transfer that can be obtained is higher with countercurrent than co-current exchange.

The continuous flow of auxiliary fluid through the second heat exchanger improves the performances of the same.

In an embodiment, said auxiliary fluid includes water.

However, water mixtures or different fluids can be used as well.

In a preferred embodiment, said auxiliary fluid outlet is located in correspondence to a bottom wall of said tank.

In the auxiliary circuit, the auxiliary fluid is apt to flow through the second heat exchanger where it is cooled by the transfer of heat to the refrigerant flowing in the refrigerant circuit. During the cooling, in the auxiliary circuit some frozen pieces of auxiliary fluid may form. These frozen pieces flow together with the liquid fraction of the auxiliary fluid throughout the auxiliary circuit. This mixture of frozen pieces and liquid enters into the tank via the auxiliary circuit inlet. Due to the fact that the density of ice is lower than the density of liquid water, the ice pieces float and gather towards the top of the tank and their vertical motion is stopped by the tank's top wall. Being the ice pieces substantially separated from the liquid portion of the fluid, at the outlet of the tank substantially only auxiliary fluid in a liquid form is present, the ice being trapped within the tank by the tank's walls. In a preferred embodiment, in order to further enhance the separation of the frozen portion of the liquid from the fluid, the outlet of the tank is located at the farthest place with respect to the ice gathering location, e.g. at the bottom wall. In this way, the chance of discharge of the ice from the tank is minimized.

Preferably, the tank includes a deflecting surface, said auxiliary fluid inlet and said deflecting surface being so arranged that said auxiliary fluid impinges said deflecting surface entering said tank.

In addition to the "automatic" separation due to gravity between ice and liquid, additional separation can be forced mechanically. In this embodiment, the fluid containing the ice pieces entering the tank impacts the deflecting surface with a certain speed, so that the separation between the liquid fraction and the ice takes please in an easy manner.

More preferably, said tank is surrounded by wall(s) defining an inner volume, one surface of said walls facing said inner volume including said deflecting surface.

The deflecting surface can be a portion of a surface of one of the walls of the tank, or a portion of a surface of an additional wall introduced for this purpose inside the tank. The impact can be forced for example by a suitable angulation of the inlet with the tank's wall or additional wall including the deflecting surface. The angulation and deflecting surface positioning depend on the auxiliary fluid speed at the inlet, on the density difference between ice and liquid and on the tank's geometry.

In a preferred embodiment, the tank includes a sieve element covering the auxiliary fluid outlet.

In this way, the discharge of ice from the tank, or at least of ice pieces above a certain dimension which is determined by the size of the apertures in the sieve element, is prevented.

In the above preferred embodiment, preferably said sieve element includes a grid.

Preferably, said auxiliary fluid is water.

Preferably, said auxiliary circuit fluid circuit is completely separated from said water circuit. Moreover, preferably said auxiliary fluid circuit is separated from a discharge circuit to discharge the waste water of the chamber. Thus, the auxiliary fluid circuit is separated from any other circuit in which water used in the chamber is flowing.

In other words, the auxiliary fluid water is not the water used in the chamber to wash or rinse the items.

According to the invention, the water used in the chamber for the washing and/or rinsing cycle is exchanging heat with the auxiliary fluid only via the refrigerant, and not directly. Therefore, there is a chain of link exchanges between the water used in the chamber and the refrigerant and then between the refrigerant and the auxiliary fluid.

Preferably, the indirect heat exchange between the water of the chamber and the auxiliary fluid does not take place when the compressor is working.

Preferably, the second heat exchanger includes an icephobic surface.

The formation and subsequent build-up of ice hinders the operation of the second heat exchanger. In order to mitigate the icing problem, the second heat exchanger includes an icephobic surface, i.e. a surface that minimizes the quantity of ice that forms on a surface and the adhesion of the accreted ice.

Any known method in order to obtain an icephobic surface can be used. Icephobic surface is made by modification of the surface by physical and chemical method. An example of Icephobic surface on stainless steel is reported in the papers of ACS Appl. Mater. Interfaces, 2013, 5 (7), pages 2549-2554 or Langmuir 2011, 27, pages 3059-3066. For example, a known methodology in order to obtain an icephobic surface includes the steps of increasing the receding water contact angle above 120° (i.e. creating a super hydrophobic surface) and of further reducing the ice adhesion strength incorporating topographical surface features that allow surface bound water droplets to exist in the composite Cassie-Baxter state before freezing occurs (ACS NANO VOL. 4, NO. 12, 7048-7052, 2010).

Preferably, said auxiliary circuit and/or said refrigerant circuit includes fins and/or a piping defining an internal and an external surface, said internal and/or external surface and/or said fins including said icephobic surface.

In order to minimize the formation of ice on the piping located within the second heat exchanger, the icephobic surface is located in the piping itself, either internally or externally, or on the fins of the second heat exchanger. Both piping belonging to the refrigerant circuit and to the auxiliary fluid circuit may include icephobic surfaces, either internally and/or externally.

Preferably, the icephobic surface is a surface in contact with the auxiliary fluid. Therefore, any surface of the piping that is in contact with the auxiliary fluid can include an icephobic surface, at least for a portion.

Preferably, the second heat exchanger can be a tube-in-tube heat exchanger including a first inner tube wherein the auxiliary fluid or the refrigerant flows and a concentric outer tube wherein the other of the auxiliary fluid or refrigerant flows. Alternatively, the heat exchanger includes two parallel tubes welded or otherwise attached to each other, in one of which the refrigerant fluid is flowing and in the other the auxiliary fluid is flowing. The two parallel tubes can also be set next to each other without any fixation. Alternatively, the second heat exchanger may include a shell and tube heat exchanger wherein the refrigerant flows inside the tube.

In an additional aspect, the invention relates to a method to use a heat pump in a washing apparatus, the washing apparatus including
- a chamber for receiving goods to be washed,
- a heat pump system including a refrigerant circuit comprising a first heat exchanger, a second heat exchanger, a compressor arranged in the circuit between the first heat exchanger and the second heat exchanger, and a pressure lowering device arranged between the second heat exchanger and the first heat exchanger,
the method comprising:
- heating water to be used in the chamber and cooling a refrigerant in the refrigerant circuit in the first heat exchanger;
- heating the refrigerant in the refrigerant circuit and cooling an auxiliary fluid in the second heat exchanger; and
- circulating said auxiliary fluid in an auxiliary circuit through said second heat exchanger and through a tank external to said second heat exchanger.

Preferably, the method also includes blocking and/or confining frozen auxiliary fluid inside said tank.

In this way, substantially only the liquid portion of the auxiliary fluid is flowing back from the tank to the second heat exchanger, increasing its efficiency.

In a further and additional aspect, the present invention is relative to a washing apparatus comprising
- a chamber for receiving goods to be washed,
- a heat pump system including a refrigerant circuit comprising a first heat exchanger being adapted to cool a refrigerant and to heat water to be used in the chamber, a second heat exchanger being adapted to heat said refrigerant and to cool an auxiliary fluid, a compressor arranged in the circuit between the first heat exchanger and the second heat exchanger, and a pressure lowering device arranged between the second heat exchanger and the first heat exchanger,
- wherein the second heat exchanger includes at least an icephobic surface.

Icephobic surface treatment is common in several technical fields. See for example the already quoted articles listed above.

Although an icephobic surface is used, it is not possible with current technologies to completely prevent ice formation, but the ice build-up could be minimized. Generally, "icephobic" surfaces combine both physical and chemical properties as morphology and surface treatment: combination of both could provide the best result in term of icephobic properties; however using only chemical treatment(s) good results could be expected as well.

Preferably, an icephobic surface is also a superhydrophobic surface. Superhydrophobic surfaces are highly hydrophobic, i.e., extremely difficult to wet. In a superhydrophobic surface, the contact angle of a water droplet exceeds 150° and the roll-off angle is less than 10°. As the contact area of water on a super hydrophobic solid surface is very small, such surfaces would effectively reduce the contact area of ice as well. Therefore, ice accretion and adhesion would be significantly reduced on super hydrophobic surfaces. It has been reported in ACS NANO VOL. 4, NO. 12, 7048-7052, 2010 that super hydrophobicity is probably a prerequisite of icephobicity and that optimizing the surface conditions of materials in order to reach extremely high contact angles >120º could result in the no wetting/no icing of surfaces.

Several ways known in the art could be used to provide such a surface.

According to an embodiment, said icephobic surface includes an icephobic coating.

In other words, a surface of the second heat exchanger is covered by a coating layer which has icephobic properties. The most frequently used molecules for this purpose are for example silicates, silianes, epoxy silanes, organosilanes, fluorinated silanes, polymerizable silanes, fatty acid ester chains, carbon nanotubes, fullerenes compounds, fluorinated polymers as: poly(vinylidene fluoride) (PVDF), Poly(tetrafluoroethylene) (PTFE), etc.

Alternatively, said icephobic surface is functionalized. A surface functionalization means a way of modifying the surface of a material by bringing physical, chemical or biological characteristics different from the ones originally found on the surface of a material. More preferably, surface functionalization includes introducing chemical functional groups to a surface. This way, materials with functional groups on their surfaces can be designed from substrates with standard bulk material properties.

In this embodiment, a surface of the second heat exchanger is functionalized in order to obtain an icephobic surface.

In a preferred embodiment, the surface to be functionalized need first to be etched (clean) at micro or nano level in order to favor the subsequent super hydrophobic treatment.

The etching could be done by chemical action (such as acid treatment, or alkali treatment depending the material to treat) or by physical treatment (such as plasma etching).

Preferably, the second step after the etching is the functionalization of the etched surface with suitable compound(s) able to provide super hydrophobic proprieties. The most frequently used molecules for this purpose are for example silicates, silanes, epoxy silanes, organosilanes, fluorinated silanes, polymerizable silanes, fatty acid ester chains, carbon nanotubes, fullerenes compounds, fluorinated polymers as: poly(vinylidene fluoride) (PVDF), Poly(tetrafluoroethylene) (PTFE), etc.

The surface which is functionalized in order to render the same icephobic is preferably realized in one or a combination of steel, stainless steel, aluminum, copper, metals in general, metal alloys, plastic, polymers in general, glass, ceramics. Most preferably, aluminum and its alloys are used.

Advantageously, in order to fix the functional compounds above listed on the surfaces several techniques could be used, for example a wet technique (Sol-gel), or a dry technique (Plasma, chemical vapor deposition - CVD, Organo-Metallic CVD, etc.)

Sol-gel is a common technique to treat surfaces or to coat it. Such method are used primarily for the fabrication of materials (typically metal oxides) starting from a colloidal solution (*sol*) that acts as the precursor for an integrated network (or *gel*) of either discrete particles or network polymers. Typical precursors are metal alkoxides and metal salts (such as chlorides, nitrates and acetates), which undergo various forms of hydrolysis and polycondensation reactions.

The chemical precursors are dissolved in a suitable solvent (e.g. alcohols). The subsequent addition of a catalyst (e.g. water or water + acid source) provides the hydrolysis and coalescence of the solution. This creates the chemical linking with surface to treat and the functional compounds. An additional drying step at low temperature provides the complete fixation of the compound and the solvent removal. At the end a chemical stable coating / functionalization has been provided. Additional post treatment(s) could be performed in order to stabilize the coating / functionalization (UV curing, chemical reaction to add extra functionality etc)

Due to the liquid form of the precursors, several ways of application could be used: dipping (immersion of the parte to treat), spraying, brushing and spinning. The most favourable could be selected on the basis of the surface to treat.

Alternatively, the dry technique is based on physical deposition by vapour phase with (in particular plasma) or without (CVD, MOCVD and others) activation.

The precursors (mainly silanes and their derivates) are in vapour phase in a camber under controlled conditions.

By chemical reaction and heat curing the stable functionalization of the surface can be obtained.

The application of the plasma provides the ionization and activation of the precursors. These activated molecules react and create the chemical link with the surface to treat. After the plasma treatment, the surface is ready, no post treatment is necessary. The way of deposition is related to the device used for plasma production (limits in term of shape and dimensions of surfaces).

For the present invention, both techniques could be useful. Sol-gel way is cheaper compared to plasma. However any other technique in order to functionalize the surface to render it icephobic, with or without antecedent etching, could be used.

The use of an icephobic surface in the second heat exchanger improves the efficiency of the second heat exchanger in many different types of apparatus' configuration.

In a preferred embodiment, the apparatus includes a reservoir apt to contain said auxiliary fluid, said second heat exchanger being located within said reservoir.

In this embodiment, the second heat exchanger is housed inside the reservoir filled with the auxiliary liquid. Heat transfer between the refrigerant and the auxiliary fluid inside the reservoir takes place.

More preferably, the reservoir is fluidly connected to water mains by means of a conduit configured so as to supply tap water from the water mains to the reservoir, said auxiliary fluid including tap water.

In this case, the auxiliary fluid is water and the water is tap water which comes in the reservoir via a conduit. Advantageously, also a water outlet to discharge the tap water from the reservoir is present.

Alternatively, the reservoir is fluidly connected to the chamber by means of a discharge conduit configured so as to supply drain water from the chamber to the resevoir, said auxiliary fluid including drain water.

Instead of introducing as an auxiliary fluid in the reservoir the tap water, the drain water from the chamber is used as auxiliary fluid.

Alternatively, said reservoir is a closed reservoir, without auxiliary fluid inlet and/or outlet.

In this embodiment, the reservoir contains a fixed amount of auxiliary fluid which does not change with time, the reservoir being filled during the apparatus fabrication, without additional refilling.

In another aspect, the invention relates to a method to use a heat pump in a washing apparatus, the washing apparatus including
- a chamber for receiving goods to be washed,
- a heat pump system including a refrigerant circuit comprising a first heat exchanger, a second heat exchanger, a compressor arranged in the circuit between the first heat exchanger and the second heat exchanger, and a pressure lowering device arranged between the second heat exchanger and the first heat exchanger,
the method comprising:
- functionalizing a surface in said second heat exchanger so as to render the same icephobic;
- heating water to be used in the chamber and cooling a refrigerant in the refrigerant circuit in the first heat exchanger;
- heating the refrigerant in the refrigerant circuit and cooling an auxiliary fluid in the second heat exchanger.

Features and advantages of the present invention will be more readily understood from the from the following detailed description of some preferred embodiments thereof, which is given below by way of non-limiting example with reference to the accompanying drawings, in which:
- figure 1 schematically shows a known washing apparatus;
- figure 2 schematically shows an embodiment of the washing apparatus of figure 1;
- figure 3 schematically shows another embodiment of the washing apparatus of figure 1;
- figure 4 schematically shows an embodiment of the washing apparatus of figure 1 but realized according to the present invention;
- figures 5a-5c show three perspective views of an element of the washing apparatus of fig. 4; and
- figure 6 schematically shows a portion of the washing apparatus of figs. 1, 2, 3 or 4.

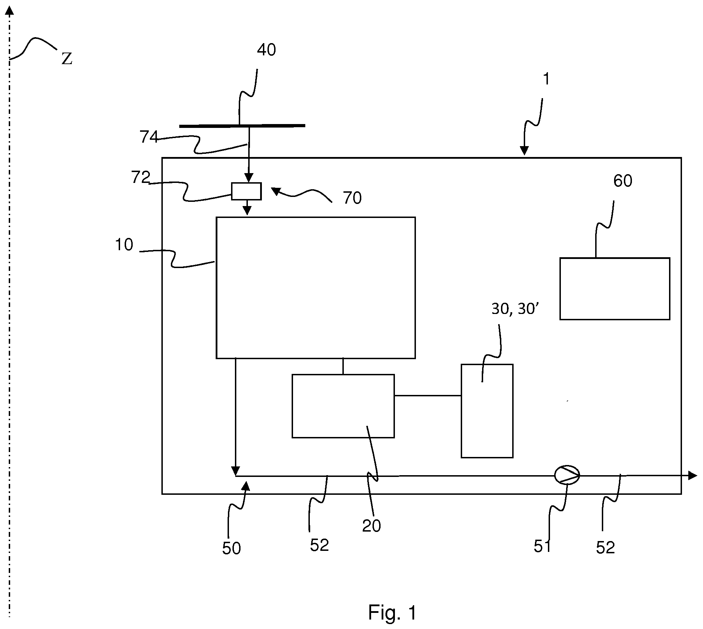

With initial reference to fig. 1, a known heat pump washing apparatus is globally indicated with 1.

The heat pump washing apparatus may include preferably a washing machine to wash clothes or a dish washer. In the following, as a preferred embodiment, a washing machine is detailed.

Washing machine 1 comprises a chamber 10 for treating goods, such as clothes, and advantageously further comprises a water inlet circuit 70 adapted to supply water, that can be optionally mixed with washing products, into the chamber 10. In the case of a laundry washing machine, the chamber 10 can be a tub which contains a drum rotatably mounted and optionally perforated (not shown).

The water inlet circuit 70 preferably comprises a detergent dispenser 72 and water inlet pipes 74.

Advantageously, the water inlet pipes 74 fluidly connect water mains 40 to the chamber 10, preferably via the detergent dispenser 72, while the latter 72 is adapted to be filled with products, for example detersives, softener, bleaching, sparkling/rinse aid substances, etc. The detergent dispenser 72 can comprise one or more compartments (not shown) for one or more products from which a certain amount of these products, depending on the washing program, is delivered into the chamber 10.

The washing apparatus 1 also comprises a water outlet circuit 50 for discharging waste water (i.e. used water optionally mixed with washing products) from the chamber 10 after process cycles (e.g., washing, rinsing cycles).

The water outlet circuit 50 can comprise a draining pump 51 and outlet draining pipes 52, for example apt to be connected to the sewage system (not shown).

The water outlet circuit 50 is advantageously fluidly connected to the bottom of the chamber 10.

Furthermore, washing apparatus 1 comprises a heat pump system 20 adapted to heat water to be used in the chamber 10. In order to heat such water, heat pump system has to absorb heat.

For this purpose, apparatus 1 includes a tank 30 or a container 30' apt to contain an auxiliary fluid from which heat is absorbed, as detailed below.

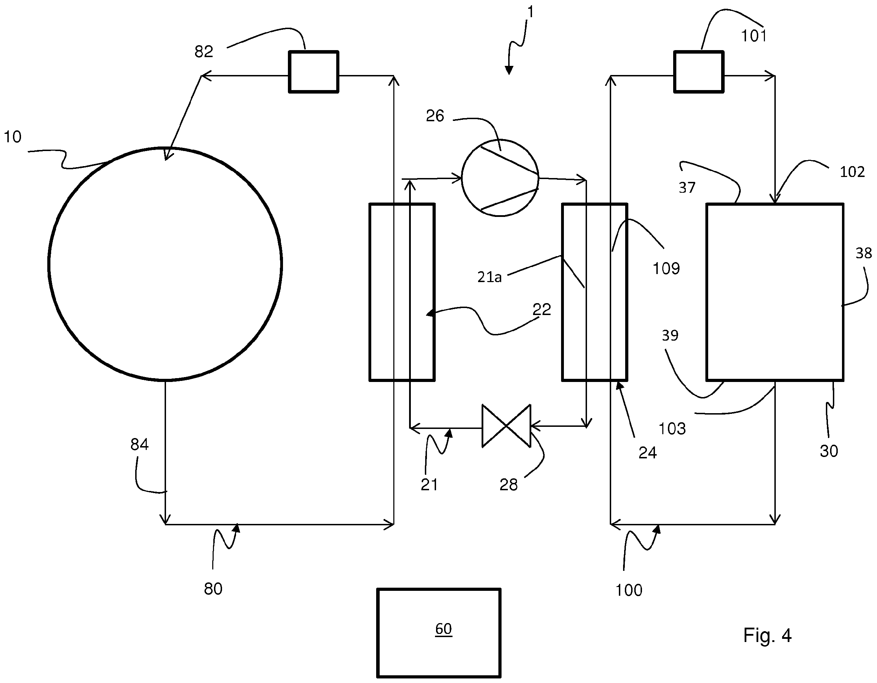

According to the present invention shown in figure 4, the heat pump system 20 comprises a refrigerant circuit 21, which is a closed recirculating circuit, in which a refrigerant can flow, and which comprises: a first heat exchanger 22 acting as a condenser for cooling the refrigerant and to heat water to be used in the process chamber 10, a second heat exchanger 24 acting as an evaporator for heating the refrigerant and to cool an auxiliary fluid, a compressor 26 arranged in the circuit between the first heat exchanger and the second heat exchanger, and a pressure lowering device 28 arranged between the second heat exchanger and the first heat exchanger.

Moreover, the apparatus 1 includes a further auxiliary circuit 100 in which the auxiliary fluid can flow, including the second heat exchanger 24 and the tank 30. The auxiliary circuit 100 preferably is a closed recirculating circuit and preferably the auxiliary fluid is water. Auxiliary circuit 100 further preferably includes a pump 101 to force fluid circulation in the circuit, the pump being located between the tank 30 and the second heat exchanger in the direction of flow of the auxiliary fluid in the auxiliary circuit 100.

Within the second heat exchanger 24, heat exchange takes place between the refrigerant in the refrigerant circuit 21 and the auxiliary fluid in the auxiliary circuit 100. Preferably, the two circuits 21,100 include respective piping 21 a, 109 located within the second heat exchanger 24 which are suitably formed and arranged in order to maximize the heat exchange. Such piping might also include fins (not shown).

In a preferred embodiment, in the second heat exchanger, the flow of refrigerant and the flow of auxiliary fluid are in opposite directions.

The second heat exchanger or evaporator 24 is preferably a fluid to refrigerant heat exchanger and it can be a tube-in-tube heat exchanger, a plate heat exchanger or similar.

In normal operation, the refrigerant is circulated within the circuit 21 by the compressor 26. Compressor 26 can be for example a variable speed compressor. The pressure lowering device 28 is preferably a controllable valve that operates under the control of a control unit to adapt the flow resistance for the refrigerant in dependency of operating states of the heat pump system 20. In alternative embodiments, the pressure lowering device 28 may include a capillary tube, a throttle valve with fixed or variable cross section, etc. (all not shown). During operation of the heat pump 20 (that is, when the compressor 26 is switched-on), heat is generated at the condenser 22 and cold is generated at the evaporator 24.

The refrigerant is pumped from the compressor 26 to the condenser 22, where liquefaction of the refrigerant takes place transferring heat from the refrigerant to the water to be used in the chamber 10. From the condenser 22, the refrigerant passes via the pressure lowering device 28 to the evaporator 24 where the refrigerant evaporates thus heat is transferred from the auxiliary fluid flowing in the auxiliary circuit 100 to the refrigerant. From the evaporator 24, the refrigerant runs back to the compressor 26.

The condenser 22 can be located within the chamber 10, preferably on a bottom region of the same, or outside the chamber 10 (as per fig. 4).

The condenser 22 is advantageously arranged so as to be able to heat the water to be used in the chamber 10.

The condenser 22 can be a tube-in-tube heat exchanger, a plate heat exchanger or similar. The water to be used in the chamber 10 is preferably made to flow through the condenser 22 so that it exchanges energy with the refrigerant by forced convention. The water can be continuously recirculated by a pump through the condenser 22 and back to the chamber 10 until the desired temperature is reached or tap water can be heated directly, by flowing through the condenser 22, before entering into the chamber 10.

Figure 4 shows an embodiment of the washing machine 1 of figure 1 wherein the water is continuously recirculated through the condenser 22 and back to the chamber 10, until the desired temperature is reached, by means of a water circuit 80.

The water circuit 80 is a recirculation circuit adapted to drain water from the chamber 10 (for example from the bottom) and to return it back into the chamber 10 at another location (for example at an upper location) via the condenser 22. Suitably, the water circuit 80 comprises a pump 82 and pipes 84 fluidly connected to the condenser 22.

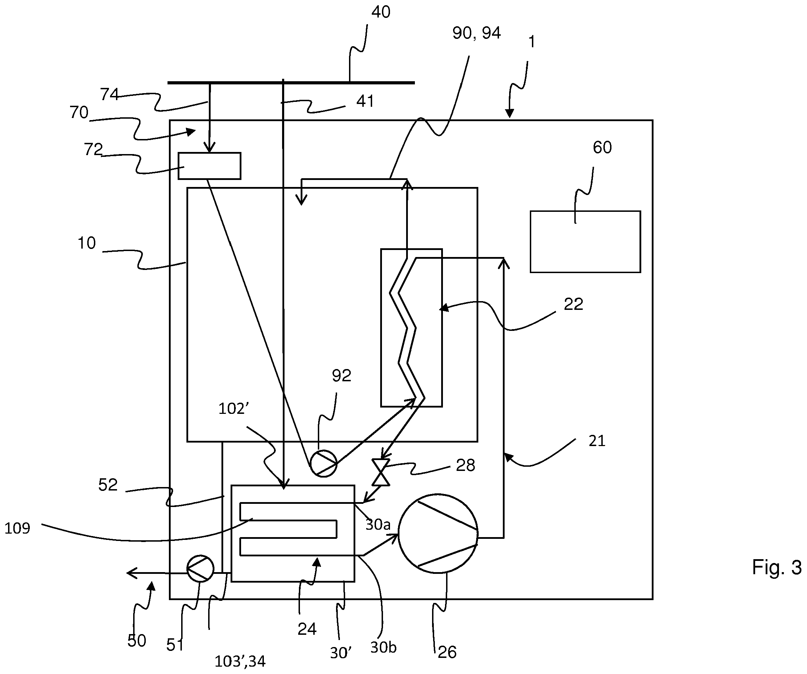

Alternatively, with reference to fig. 3 (the reference to this figure is made only for the arrangement of the water circuit), the washing machine 1 comprises a different water circuit 90.

The water circuit 90 comprises a pump 92 and pipes 94 adapted to directly drain tap water from the water mains 40 bypassing the chamber 10, to conduct the tap water through the condenser 22 and then into the chamber 10, without recirculation. In order to guarantee that the desired process temperature is reached, the heat exchanger 22 and the flow rate of the water should be suitably sized.

Referring back to fig. 4, regardless of the configuration of the water circuit which can be any (80 or 90 or others), the auxiliary fluid flowing within circuit 100 cools down and eventually freezes during the heat exchange that takes place within the evaporator 24. Frozen pieces of fluid flow together with the liquid portion of the auxiliary fluid within the auxiliary circuit 100 and, through an auxiliary fluid inlet 102, reach tank 30. The circulation of the fluid within the auxiliary circuit 100 is preferably forced by pump 101.

At the tank 30 entrance, the auxiliary fluid containing possible frozen pieces might impinge on a tank surface, called deflecting surface, for example it may impinge on one of the tank's walls, such as the bottom wall 39, lateral walls 38 or top wall 37. Alternatively, an additional wall (not shown in the appended drawings) might be located in the tank 30 along the trajectory of the fluid entering the same.

Inside tank 30, a separation between the frozen pieces and the liquid portion of the fluid takes places, both mechanically due to the possible impact with the deflecting surface, and "automatically" due to gravity. Frozen pieces of fluid therefore collect in proximity of the top wall 37 of the tank 30.

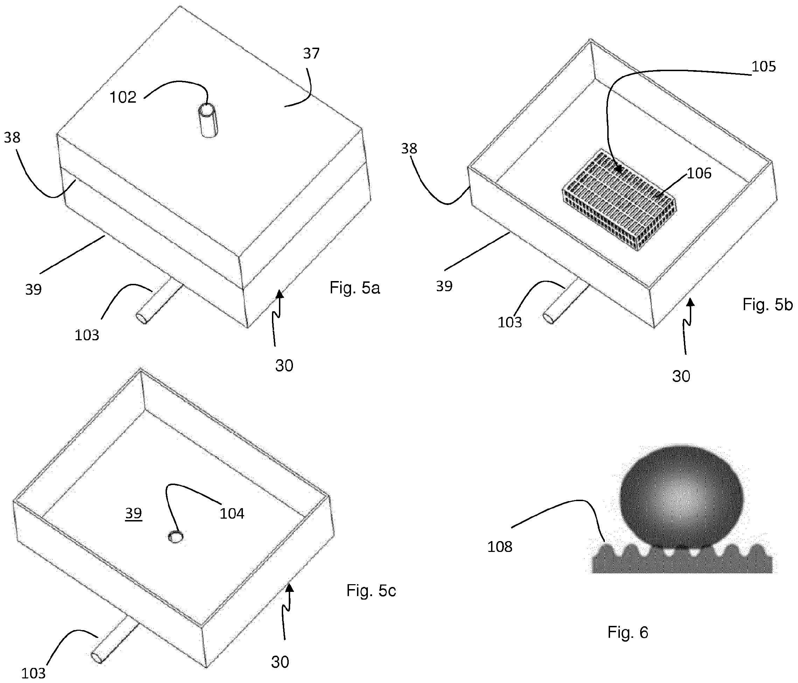

Preferably, the tank 30 includes an auxiliary fluid outlet 103 for the fluid, and more preferably the outlet 103 is located on or in proximity of the bottom wall 39 of tank 30 so that the frozen pieces of auxiliary fluid are generally located remotely from the outlet (figs. 4 and 5a shows this embodiment).

In figs. 5a - 5c, the tank 30 is shown in a more detailed enlarged view. Fig. 5a shows the complete tank 30, having a box-like shape, and the auxiliary fluid inlet and outlet 102, 103 extending from the top wall 37 and bottom wall 39, respectively. Figs. 5b and 5c show tank 30 where the top wall 37 and also a portion of lateral walls 38 have been removed. The opening 104 of the outlet 103 in the bottom wall 39 is visible in fig. 5c.

According to a preferred embodiment, the opening 104 is covered by a sieve element 105 visible in fig. 5b. The sieve element 105, in the preferred embodiment a grid, covers the opening 104 completely so that only fluid in liquid form or very small frozen pieces of fluid, e.g. pieces of fluid which are smaller than the openings 106 defined by the sieve element 105, can exit tank 30.

The substantially ice-free auxiliary fluid exiting the tank 30 through outlet 103 recirculates through the evaporator 24 and it is regenerated in order to repeat the cooling cycle, ready to be cooled again in the evaporator.

Additionally, according to a preferred embodiment, tank 30 can be thermally coupled to the water outlet circuit 50 in order to transfer heat from waste water flowing through the pipes 52 into the auxiliary fluid contained in the tank 30. For example, thermal coupling can be achieved by placing the draining pipes 52 in contact with the tank 30.

Optionally, the tank 30 can be thermally coupled to electronic components and heated elements inside the machine (not shown, as for example compressor, motor, inside air). The thermal energy released by these components can be transferred to the fluid in the tank 30 for example by natural convection, forced convection or conduction.

In this way the temperature of the auxiliary fluid is further increased before reaching the evaporator 24 for the next cycle.

According to a preferred embodiment of the invention, the evaporator 24 includes an icephobic surface 108, as depicted in fig. 6. The surface 108 limits the formation and building up of ice on the surface itself due to its icephobic properties. The icephobic properties are due to a proper functionalization of the surface.

The evaporator comprises piping 21 a, 109 of the refrigerant circuit 21 and of the auxiliary fluid circuit 100, respectively, located within evaporator 24. The piping 21 a (109) of the refrigerant circuit 21 (auxiliary circuit 100) defines an external and an internal surface, the latter being in contact with the refrigerant (auxiliary fluid). The icephobic surface 108 can be a portion of an external surface of the piping of the auxiliary conduit 100 and/or of the refrigerant circuit 21. Preferably, the icephobic surface 108 can be part of the internal and or external surface of the piping 109 of the auxiliary conduit 100. Alternatively or in addition, in can be a portion of the surface of fins present in the evaporator 24. In case of a tube-in-tube heat condenser, also the external surface of the inner tube in which the refrigerant is flowing can include an icephobic surface. Formation of ice on the piping or fins' surface of evaporator 24 is therefore minimized and heat exchange is enhanced.

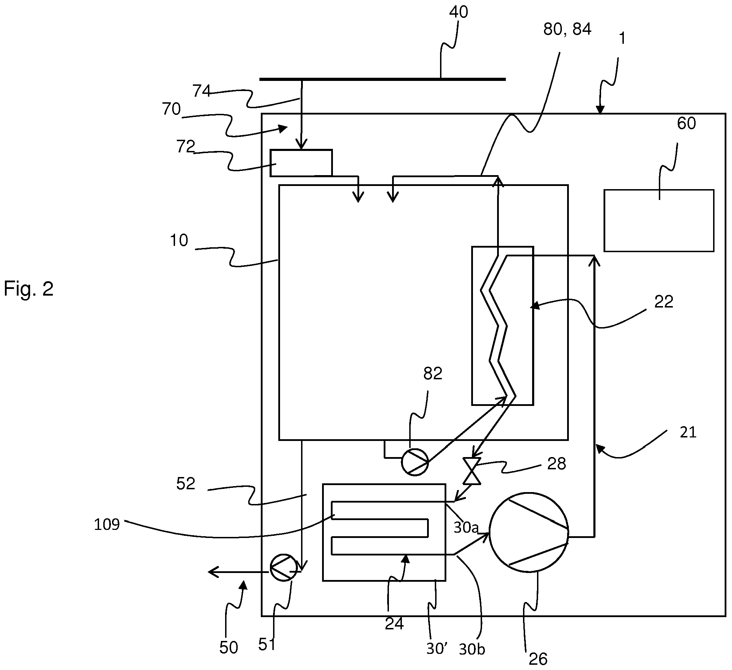

With now reference to figures 2 and 3, an embodiment of known washing machine 1 of fig. 1 is depicted.

In this embodiment, the evaporator 24 is housed within the reservoir 30'. Preferably, the auxiliary fluid is in direct contact with the refrigerant conduit 21.

The apparatus 1 and heat pump system includes the same characteristics as described in the above embodiment with reference to fig. 1 and 4. In the following only the differences between the embodiment of fig. 4 and the embodiments of figs. 2 and 3 will be detailed.

The chamber 10 is fed with warm water which is heated by condenser 22 and which is flowing into water circuit 80,90 as described with reference to figs. 1, 3 and 4.

Reservoir 30' is preferably sealed, i.e. there is no input or output for the auxiliary fluid contained therein. Preferably, reservoir 30' is filled in the factory during the apparatus' production and the auxiliary fluid is not refilled or replaced. This embodiment is shown in fig. 2.

In all embodiments of figs. 2 and 3, the auxiliary fluid contained in the reservoir30' advantageously is water.

The reservoir 30' containing the evaporator 24 is advantageously positioned on a bottom region of the washing machine 1.

The amount of liquid contained in the reservoir 30' and the volume of the reservoir 30' depends on the amount of water that must be heated up during a process cycle of the washing machine 1, the temperature required for the water, and the percentage of frozen liquid in the reservoir30'.

The shape of the reservoir can be of any type; advantageously it has a box-like shape. Preferably, reservoir 30' is closed, i.e. it defines a finite inner volume.

Advantageously, in the embodiments of fig. 2 and 3, from reservoir 30', suitable input and output piping 30a,30b for the refrigerant protrude in order to connect the evaporator 24 to the remaining refrigerant circuit 21 outside reservoir 30'.

Preferably, the evaporator 24 of embodiments of figs. 2 and 3 includes an icephobic surface 108.

Icephobic surface 108 is shown in fig. 6 where a droplet of water attached to it, which might turn into ice during the cooling phase of the evaporator 24, is shown.

Piping 109 of the refrigerant circuit 21 is located within reservoir 30'. In this piping 109, the refrigerant flows and exchange heat with the auxiliary fluid present in the tank 30 itself. The piping 109 defines an external and an internal surface, being in contact with the auxiliary fluid and the refrigerant, respectively. The icephobic surface 108 is advantageously a portion of the external surface of the piping 109 of the refrigerant circuit 21 in the tank, so that icing of the auxiliary fluid on the piping is minimized. Alternatively or in addition, the icephobic surface 109 is a portion of the surface of fins (not shown) present in the evaporator 24. The position of the icephobic surface 109 is such that the auxiliary fluid can be in contact with the same. Formation of ice on the piping or fins of evaporator 24 is therefore minimized and heat exchange is enhanced.

Additionally, preferably all characteristics of the icephobic surface 108 described with reference to the embodiment of fig. 4 are applicable in these embodiments of figs. 2 and 3 as well.

In the following, the operation of the washing machine 1 is described, with reference to all embodiments depicted in figs. 1 - 6. Possible differences between the various embodiments will be specified.

During operation of the heat pump 20, the liquid in the tank 30 can be moved by a pump or impeller (not shown) in order to increase the heat transfer coefficient.

The washing apparatus 1 suitably comprises a control unit 60 configured to control operation of the washing apparatus 1.

When the washing apparatus 1 is turned on in order to perform a predetermined washing program, the control unit 60 is advantageously configured to switch the heat pump 20 on any time water has to be heated into the chamber 10 in order to perform a process cycle (e.g., washing, rinsing, and similar) of the predetermined washing program.

The control unit 60 is also advantageously configured to switch the heat pump 20 off when the water in the chamber 10 reaches a desired process temperature or when the liquid in the tank 30 reaches a predetermined condition (for example, when it is in large part iced).

The auxiliary fluid exchanges sensible heat during a cooling phase of the fluid and latent heat during an icing phase (if any). Accordingly, the control unit 60 is advantageously configured to operate the heat pump 20 so that the auxiliary fluid either in the auxiliary circuit 100 or in the tank 30 is at least partially frozen.

Depending on the program design, heat pump power, and wash temperature, the heat pump 20 alone might be insufficient to heat up the water to the desired process temperature in the available time. Therefore, a conventional electrical heater (not shown) may be comprised in the washing machine 1 as well. The conventional electrical heater can be suitably positioned on the bottom of the chamber 10.

As stated above, during operation of the heat pump 20 (that is while the compressor is switched-on), the auxiliary fluid is cooled down with respect to a starting temperature and, optionally, at least partially iced.

In the embodiments of figs 2 and 3, the ice remains inside the reservoir 30' where it is formed. In order to prevent too much icing on the evaporator, a surface of the same, preferably a portion 108 of the external surface of piping 109 of the refrigerant circuit 21 housed inside the reservoir 30', has been functionalized in order to have icephobic properties.

In the embodiment of fig. 4 object of the present invention, the ice flows inside the auxiliary circuit 100 reaching tank 30 and control circuit 60 suitably controls pump 106 so that a speed is imparted to the fluid within the auxiliary circuit 100.

Ice is thus trapped in tank 30.

In the embodiment of figs. 2 and 3, the cooled/iced auxiliary fluid in the reservoir 30' needs to be regenerated, that is warmed up/melted towards the starting temperature, in order to be used again as energy source to the heat pump 20 in a next, optionally immediately subsequent, washing cycle.

Preferably, cooled/iced liquid regeneration in the reservoir 30' is performed by using water directly from the chamber 10.

## Claims

1. A heat pump washing apparatus (1) comprising
• a chamber (10) for receiving goods to be washed,
• a heat pump (20) system including a refrigerant circuit (21) comprising a first heat exchanger (22) being adapted to cool a refrigerant and to heat water to be used in the chamber (10), a second heat exchanger (24) being adapted to heat said refrigerant and to cool an auxiliary fluid, a compressor (26) arranged in the circuit between the first heat exchanger and the second heat exchanger, and a pressure lowering device (28) arranged between the second heat exchanger and the first heat exchanger,
• an auxiliary circuit (100) wherein said auxiliary fluid is apt to flow, a portion (109) of said auxiliary circuit being adapted to exchange heat with said refrigerant circuit (21) within said second heat exchanger (24), said auxiliary circuit including a tank (30) having an auxiliary fluid inlet (102) and an auxiliary fluid outlet (103),
• **characterised in that** said tank being external to said second heat exchanger (24).

2. The washing apparatus (1) according to claim 1, wherein said auxiliary circuit (100) is a closed recirculation circuit.

3. The washing apparatus according to claim 1 or 2, wherein said second heat exchanger (24) is a countercurrent heat exchanger, said refrigerant and said auxiliary fluid flowing in respective pipes (21a,109) in opposite directions.

4. The washing apparatus (1) according to any of the preceding claims, wherein said auxiliary fluid includes water.

5. The washing apparatus (1) according to any of the preceding claims, wherein said auxiliary fluid outlet (103) is located in correspondence to a bottom wall (39) of said tank (30).

6. The washing apparatus (1) according to any of the preceding claims, wherein said auxiliary circuit (100) includes a pump (101) configured so as to obtain forced convection of said auxiliary fluid in the portion of said auxiliary circuit (100) within said second heat exchanger (24).

7. The washing apparatus (1) according to claim 6, wherein said pump (101) is located between said tank (30) and said second heat exchanger (24) in the direction of flow of said auxiliary fluid.

8. The washing apparatus (1) according to any of the preceding claims, wherein tank (30) includes a deflecting surface, said auxiliary fluid inlet (102) and said deflecting surface being so arranged that said auxiliary fluid impinges said deflecting surface entering said tank.

9. The washing apparatus (1) according to claim 8, wherein said tank is surrounded by wall(s) (37,38,39) defining an inner volume, one surface of said walls facing said inner volume including said deflecting surface.

10. The washing apparatus (1) according to any of the preceding claims, including a sieve element (105) covering the auxiliary fluid outlet (103) of said tank.

11. The washing apparatus (1) according to claim 10, wherein said sieve element (105) includes a grid.

12. The washing apparatus (1) according to any of the preceding claims, wherein said second heat exchanger (24) includes an icephobic surface (108).

13. The washing apparatus (1) according to claim 12, wherein said auxiliary circuit (100) and/or said refrigerant circuit (21) includes fins and/or a piping (109; 21 a) defining an internal and an external surface, said internal and/or external surface and/or said fins including said icephobic surface (108).

14. A method to use a heat pump in a washing apparatus (1), the washing apparatus including
• a chamber (10) for receiving goods to be washed,
• a heat pump (20) system including a refrigerant circuit (21) comprising a first heat exchanger (22), a second heat exchanger (24), a compressor (26) arranged in the circuit between the first heat exchanger and the second heat exchanger, and a pressure lowering device (28) arranged between the second heat exchanger and the first heat exchanger,
the method comprising:
• heating water to be used in the chamber (10) and cooling a refrigerant in the refrigerant circuit (21) in the first heat exchanger (22);
• heating the refrigerant in the refrigerant circuit (21) and cooling an auxiliary fluid in the second heat exchanger (24);
• circulating said auxiliary fluid in an auxiliary circuit (100) through said second heat exchanger (24) and through a tank (30)
• **characterised in that** said tank being external to said second heat exchanger (24).

15. The method according to claim 14, including:
• Blocking frozen auxiliary fluid inside said tank (30).

## Patentansprüche

1. Wärmepumpenwaschvorrichtung (1), umfassend:
• eine Kammer (10) zum Aufnehmen von zu waschenden Gegenständen,
• ein Wärmepumpensystem (20), das einen Kühlmittelkreislauf (21) einschließt, umfassend einen ersten Wärmetauscher (22), der zum Kühlen eines Kühlmittels und zum Erwärmen von in der Kammer (10) zu verwendendem Wasser vorgesehen ist, einen zweiten Wärmetauscher (24), der zum Erwärmen des Kühlmittels und zum Kühlen eines Hilfsfluids vorgesehen ist, einen Kompressor (26), der in dem Kreislauf zwischen dem ersten Wärmetauscher und dem zweiten Wärmetauscher angleordnet ist, und eine Druckabsenkungsvorrichtung (28), die zwischen dem zweiten Wärmetauscher und dem ersten Wärmetauscher angeordnet ist,
• einen Hilfskreislauf (100), wobei das Hilfsfluid zum Fließen geeignet ist, wobei ein Abschnitt (109) des Hilfskreislaufs zum Wärmetausch mit dem Kühlmittelkreislauf (21) innerhalb des zweiten Wärmetauschers (24) adaptiert ist, wobei der Hilfskreislauf einen Tank (30) mit einem Hilfsfluideinlass (102) und einem Hilfsfluidauslass (103) einschließt,
• **dadurch gekennzeichnet, dass** sich der Tank außerhalb des zweiten Wärmetauschers (24) befindet.

2. Waschvorrichtung (1) nach Anspruch 1, wobei der Hilfskreislauf (100) ein geschlossener Umwälzkreislauf ist.

3. Waschvorrichtung nach Anspruch 1 oder 2, wobei der zweite Wärmetauscher (24) ein Gegenstromwärmetauscher ist, wobei das Kühlmittel und das Hilfsfluid in jeweiligen Leitungen (21a, 109) in entgegengesetzte Richtungen fließen.

4. Waschvorrichtung (1) nach einem der vorhergehenden Ansprüche, wobei das Hilfsfluid Wasser einschließt.

5. Waschvorrichtung (1) nach einem der vorhergehenden Ansprüche, wobei der Hilfsfluidauslass (103) entsprechend einer Bodenwand (39) des Tanks (30) positioniert ist.

6. Waschvorrichtung (1) nach einem der vorhergehenden Ansprüche, wobei der Hilfskreislauf (100) eine Pumpe (101) einschließt, die ausgelegt ist, um eine erzwungene Konvektion des Hilfsfluids in dem Abschnitt des Hilfskreislaufs (100) innerhalb des zweiten Wärmetauschers (24) zu erhalten.

7. Waschvorrichtung (1) nach Anspruch 6, wobei die Pumpe (101) zwischen dem Tank (30) und dem zweiten Wärmetauscher (24) in Flussrichtung des Hilfsfluids positioniert ist.

8. Waschvorrichtung (1) nach einem der vorhergehenden Ansprüche, wobei Tank (30) eine Umlenkfläche einschließt, wobei der Hilfsfluideinlass (102) und die Umlenkfläche so angeordnet sind, dass das Hilfsfluid beim Eintreten in den Tank auf die Umlenkfläche trifft.

9. Waschvorrichtung (1) nach Anspruch 8, wobei der Tank von einer Wand/von Wänden (37, 38, 39) umgeben ist, die ein Innenvolumen definiert bzw. definieren, wobei eine Oberfläche der Wände zu dem Innenvolumen einschließlich der Umlenkfläche weist.

10. Waschvorrichtung (1) nach einem der vorhergehenden Ansprüche, die ein Siebelement (105) einschließt, das den Hilfsfluidauslass (103) des Tanks bedeckt.

11. Waschvorrichtung (1) nach Anspruch 10, wobei das Siebelement (105) ein Gitter einschließt.

12. Waschvorrichtung (1) nach einem der vorhergehenden Ansprüche, wobei der zweite Wärmetauscher (24) eine eisphobe Oberfläche (108) einschließt.

13. Waschvorrichtung (1) nach Anspruch 12, wobei der Hilfskreislauf (100) und/oder der Kühlmittelkreislauf (21) Flossen und/oder eine Leitung (109; 21a) einschließt, die eine innere und eine äußere Oberfläche definiert bzw. definieren, wobei die innere und/oder äußere Oberfläche und/oder die Flossen die eisphobe Oberfläche (108) einschließen.

14. Verfahren zum Verwenden einer Wärmepumpe in einer Waschvorrichtung (1), wobei die Waschvorrichtung einschließt:
• eine Kammer (10) zum Aufnehmen von zu waschenden Gegenständen,
• ein Wärmepumpensystem (20), das einen Kühlmittelkreislauf (21) einschließt, umfassend einen ersten Wärmetauscher (22), einen zweiten Wärmetauscher (24), einen Kompressor (26), der in dem Kreislauf zwischen dem ersten Wärmetauscher und dem zweiten Wärmetauscher angeordnet ist, und eine Druckabsenkungsvorrichtung (28), die zwischen dem zweiten Wärmetauscher und dem ersten Wärmetauscher angeordnet ist,
wobei das Verfahren umfasst:
• Erwärmen des in der Kammer (10) zu verwendenden Wassers und Kühlen eines Kühlmittels in dem Kühlmittelkreislauf (21) in dem ersten Wärmetauscher (22);
• Erwärmen des Kühlmittels in dem Kühlmittelkreislauf (21) und Kühlen eines Hilfsfluids in dem zweiten Wärmetauscher (24);
• Umwälzen des Hilfsfluids in einem Hilfskreislauf (100) durch den zweiten Wärmetauscher (24) und durch einen Tank (30),
• **dadurch gekennzeichnet, dass** sich der Tank außerhalb des zweiten Wärmetauschers (24) befindet.

15. Verfahren nach Anspruch 14, einschließend:
• Blockieren von gefrorenem Hilfsfluid im Inneren von Tank (30).

## Revendications

1. Appareil de lavage à pompe de chaleur (1), comprenant :
une chambre (10) permettant de recevoir des articles à laver ;
un système de pompe à chaleur (20) comprenant un circuit de refroidissement (21) comprenant un premier échangeur de chaleur (22) conçu pour refroidir un fluide frigorigène et chauffer de l'eau à utiliser dans la chambre (10), un second échangeur de chaleur (24) conçu pour chauffer ledit fluide frigorigène et refroidir un fluide auxiliaire, un compresseur (26) disposé dans le circuit entre le premier échangeur de chaleur et le second échangeur de chaleur, et un dispositif d'abaissement de pression (28) disposé entre le second échangeur de chaleur et le premier échangeur de chaleur ;
un circuit auxiliaire (100) dans lequel ledit fluide auxiliaire peut circuler, une partie (109) dudit circuit auxiliaire étant conçue pour échanger de la chaleur avec ledit circuit de refroidissement (21) dans ledit second échangeur de chaleur (24), ledit circuit auxiliaire comprenant un réservoir (30) ayant une entrée de fluide auxiliaire (102) et une sortie de fluide auxiliaire (103) ;
**caractérisé en ce que** ledit réservoir est externe audit second échangeur de chaleur (24).

2. Appareil de lavage (1) selon la revendication 1, dans lequel ledit circuit auxiliaire (100) est un circuit de recirculation fermé.

3. Appareil de lavage selon la revendication 1 ou 2, dans lequel ledit second échangeur de chaleur (24) est un échangeur de chaleur à contre-courant, ledit fluide frigorigène et ledit fluide auxiliaire s'écoulant dans des tuyaux respectifs (21a, 109) dans des directions opposées.

4. Appareil de lavage (1) selon l'une quelconque des revendications précédentes, dans lequel ledit fluide auxiliaire comprend de l'eau.

5. Appareil de lavage (1) selon l'une quelconque des revendications précédentes, dans lequel ladite sortie de fluide auxiliaire (103) est située en correspondance avec une paroi inférieure (39) dudit réservoir (30).

6. Appareil de lavage (1) selon l'une quelconque des revendications précédentes, dans lequel ledit circuit auxiliaire (100) comprend une pompe (101) conçue de manière à obtenir une convection forcée dudit fluide auxiliaire dans la partie dudit circuit auxiliaire (100) dans ledit second échangeur de chaleur (24).

7. Appareil de lavage (1) selon la revendication 6, dans lequel ladite pompe (101) est située entre ledit réservoir (30) et ledit second échangeur de chaleur (24) dans la direction d'écoulement dudit fluide auxiliaire.

8. Appareil de lavage (1) selon l'une quelconque des revendications précédentes, dans lequel le réservoir (30) comprend une surface de déviation, ladite entrée de fluide auxiliaire (102) et ladite surface de déviation étant disposées de sorte que ledit fluide auxiliaire entre en contact avec ladite surface de déviation en entrant dans ledit réservoir.

9. Appareil de lavage (1) selon la revendication 8, dans lequel le réservoir est entouré par une ou plusieurs parois (37, 38, 39) définissant un volume intérieur, une surface desdites parois étant située en regard dudit volume intérieur comprenant ladite surface de déviation.

10. Appareil de lavage (1) selon l'une quelconque des revendications précédentes, comprenant un élément de tamisage (105) couvrant la sortie de fluide auxiliaire (103) dudit réservoir.

11. Appareil de lavage (1) selon la revendication 10, dans lequel ledit élément de tamisage (105) comprend une grille.

12. Appareil de lavage (1) selon l'une quelconque des revendications précédentes, dans lequel ledit second échangeur de chaleur (24) comprend une surface glaciophobe (108).

13. Appareil de lavage (1) selon la revendication 12, dans lequel ledit circuit auxiliaire (100) et/ou ledit circuit de refroidissement (21) comprennent des ailettes et/ou une tuyauterie (109, 21a) définissant une surface interne et externe, ladite surface interne et/ou externe et/ou lesdites ailettes comprenant ladite surface glaciophobe (108).

14. Procédé d'utilisation d'une pompe à chaleur dans un appareil de lavage (1), l'appareil de lavage comprenant :
une chambre (10) permettant de recevoir des articles à laver ;
un système de pompe à chaleur (20) comprenant un circuit de refroidissement (21) comprenant un premier échangeur de chaleur (22), un second échangeur de chaleur (24), un compresseur (26) disposé dans le circuit entre le premier échangeur de chaleur et le second échangeur de chaleur, et un dispositif d'abaissement de pression (28) disposé entre le second échangeur de chaleur et le premier échangeur de chaleur ;
le procédé consistant à :
chauffer de l'eau à utiliser dans la chambre (10) et refroidir un fluide frigorigène dans le circuit de refroidissement (21) dans le premier échangeur de chaleur (22) ;
chauffer le fluide frigorigène dans le circuit de refroidissement (21) et refroidir un fluide auxiliaire dans le second échangeur de chaleur (24) ;
faire circuler ledit fluide auxiliaire dans un circuit auxiliaire (100) à travers ledit second échangeur de chaleur (24) et à travers un réservoir (30) ;
**caractérisé en ce que** ledit réservoir est externe audit second échangeur de chaleur (24).

15. Procédé selon la revendication 14, consistant à :
bloquer le fluide auxiliaire congelé à l'intérieur dudit réservoir (30).
